# EUROPÄISCHE PATENTSCHRIFT

(11) **EP 3 263 426 B1**
(45) Veröffentlichungstag und Bekanntmachung des Hinweises auf die Patenterteilung: **04.09.2019**
(21) Anmeldenummer: 16177556.4
(22) Anmeldetag: 01.07.2016
(51) Int. Cl.: B62D 25/04, B62D 35/00, B60P 3/32, B60R 13/04

(54) **B-SÄULENKONSTRUKTION UND KRAFTFAHRZEUG**
B COLUMN STRUCTURE AND MOTOR VEHICLE
CONSTRUCTION À COLONNES B ET VÉHICULE AUTOMOBILE

(43) Veröffentlichungstag der Anmeldung: 03.01.2018
(73) Patentinhaber: Niesmann+Bischoff GmbH, 56751 Polch (DE)
(72) Erfinder: Weiber, Andreas, 56072 Koblenz (DE)
(74) Vertreter: Müller Schupfner & Partner Patent- und Rechtsanwaltspartnerschaft mbB

(56) Entgegenhaltungen:
- DE-A1-102007 039 315
- DE-U1-202011 002 226
- JP-A- H09 240 385
- US-A- 5 004 293
- US-A1- 2014 197 660

## Beschreibung

Die Erfindung betrifft eine B-Säulenkonstruktion für ein Kraftfahrzeug mit einem Fahrerhaus und einem hinter dem Fahrerhaus angeordneten Aufbau, sowie ein entsprechendes Kraftfahrzeug. Hierbei kann es sich z. B. um ein Reisemobil, insbesondere ein teilintegriertes Reisemobil, oder einen Kraftwagen mit Kofferaufbau oder Wohnkabine handeln. Die B-Säulenkonstruktion dient dazu, das Fahrerhaus mit dem Aufbau zu verbinden.

Reisemobile und auch Fahrzeuge mit Kofferaufbauten oder Wohnkabinen bestehen in der Regel aus einem Fahrgestell mit einem Fahrerhaus (auch Triebkopf genannt) und einem Aufbau. Der Aufbau wird oft aus Sandwichplatten aufgebaut und mit dem Fahrerhaus verbunden. Insbesondere die Seitenwände und das Dach des Aufbaus müssen mit den Seitenwänden und dem Dach des Fahrerhauses konstruktiv verbunden werden, wobei oft noch eine Verbreiterung des Fahrzeugs vom Fahrerhaus zum Aufbau hin verwirklicht werden soll. Oft werden für die Verbindung der Seitenwände einfache Platten aus Holz oder Sandwichmaterial, sogenannte Steher verwendet, welche quer zur Fahrtrichtung angeordnet und dann mit der Hinterseite des Fahrerhauses und der Vorderseite des Aufbaus verbunden sind. Eine solche Verbindung kann je nach Ausführung zur besseren oder schlechteren Steifigkeit des gesamten Fahrzeugs beitragen.

Die US 5,004,293 offenbart eine Anordnung für Lieferwagen, welche zwischen dem Fahrerhaus und dem Aufbau auf der Ladefläche angebracht wird. Dabei dient die Anordnung dazu einen Durchgang zwischen dem Fahrerhaus und dem Aufbau herzustellen. Die Anordnung wird aus flexiblem Material hergestellt und wird mit Schnellverschlüssen an die Rückseite des Fahrerhauses montiert.

Die US 2014/0197660 offenbart einen Omnibus mit einem Aufbau mit einer Frontscheibe auf der Fahrerkabine, welche es ermöglicht den Fahrgästen im hinteren Teil des Omnibusses nach vorne zu schauen. Die Fensterdacheinheit umfasst ein Fenster, welches trapezförmig und nach hinten gewölbt ist.

Die DE 10 2007 039 315 A1 offenbart ein Wohnmobil mit einem Fahrerhaus und einem Aufbau, wobei das Fahrerhaus und der Aufbau über einen Fender miteinander verbunden werden. Die Dachhaube weist einen Teil des Fenders auf und ein weiteres Bauteil überdeckt die restliche Fläche zwischen Fahrerhaus und Aufbau.

Die Erfindung hat sich die Aufgabe gestellt, eine Konstruktion zu finden, die einen fließenden Übergang vom Fahrerhaus zum Aufbau bildet und eine hohe Steifigkeit des gesamten Fahrzeuges gewährleistet.

Diese Aufgabe wird gelöst durch eine B-Säulenkonstruktion gemäß Anspruch 1 und ein Kraftfahrzeug gemäß Anspruch 13. Bevorzugte Ausführungsformen sind in den Unteransprüchen wiedergegeben.

Die erfindungsgemäße B-Säulenkonstruktion weist mindestens ein als Formteil ausgebildetes Strukturteil und eine äußere B-Säulenverkleidung auf. Das Strukturteil und die äußere B-Säulenverkleidung übernehmen die zentrale Verbindung zwischen einer Seitenwand des Aufbaus und der Rückseite des Fahrerhauses. Dadurch, dass das Strukturteil als Formteil ausgebildet ist, kann ein aerodynamisch günstiger Übergang vom Fahrerhaus zum Aufbau gestaltet werden. Darüber hinaus führt die erfindungsgemäße B-Säulenkonstruktion zu einer hohen Steifigkeit des Gesamtfahrzeuges. Dies hat positive Auswirkungen auf die Fahreigenschaften des Fahrzeuges.

Das Strukturelement 6 ist vorzugsweise so gestaltet, dass es mit der davor sitzenden äußeren B-Säulenverkleidung verbunden, insbesondere verklebt, werden kann und der Verbund so eine hohe Steifigkeit aufweist. Insbesondere sind sowohl das Strukturteil, als auch die äußere B-Säulenverkleidung dazu konfiguriert, mit dem Fahrerhaus und miteinander verbunden zu werden. Mit "dazu konfiguriert" ist hier gemeint, dass Strukturteil und B-Säulenverkleidung dazu geeignet und ausgelegt sind, miteinander sowie mit Fahrerhaus und Seitenwand, wie angegeben, zusammenzuwirken. Fahrerhaus und Aufbau sind jedoch nicht Teil der B-Säulenkonstruktion selbst. Vorteilhaft erfolgt die Verbindung zwischen dem Strukturteil und der äußeren B-Säulenverkleidung zumindest teilweise stoffschlüssig, insbesondere durch Kleben.

Dadurch, dass Strukturteil und äußere B-Säulenverkleidung auch miteinander verbunden sind, ergibt sich eine besondere Steifigkeit und Festigkeit der B-Säulenkonstruktion, welche zu einer hohen Steifigkeit des Gesamtfahrzeuges führt. Vorteilhaft sind Strukturteil und äußere B-Säulenverkleidung in mehreren Flächenbereichen miteinander verklebt. Außerdem ist jedes dieser Elemente mit dem Fahrerhaus, insbesondere im Bereich dessen B-Säule, verbunden. Das Strukturteil ist bevorzugt mit der B-Säule des Fahrerhauses durch ein Verbindungselement verbunden, insbesondere verschraubt, und ggf. zusätzlich verklebt, während die äußere B-Säulenverkleidung vorzugsweise außen mit dem Fahrerhaus sowie zusätzlich mit dem Dach und einer Seitenwand des Aufbaus verklebt wird.

In vorteilhaften Ausführungsformen sind die Erstreckungsrichtungen des Strukturteils und der äußeren B-Säulenverkleidung im Bereich der stoffschlüssigen Verbindung im Wesentlichen parallel zueinander. Unter der Erstreckungsrichtung eines Bauteils ist dessen (über die Fläche des Bauteils variierende) Ausrichtung des Bauteils zu verstehen. Dadurch lässt sich eine besonders feste Klebeverbindung realisieren. Vorteilhaft handelst es sich bei dem Strukturteil und der äußeren B-Säulenverkleidung um flächige Elemente, wie insbesondere geformte Platten, z. B. aus faserverstärktem Kunststoff oder Metall.

Gemäß einer vorteilhaften Ausführungsform erstreckt sich die B-Säulenkonstruktion über einen sogenannten B-Säulenbereich, welche den Bereich am Kraftfahrzeug bezeichnet, an dem die B-Säulenkonstruktion angeordnet ist. Der B-Säulenbereich weist einen Abstandsbereich zwischen dem Fahrerhaus und einer Seitenwand des Aufbaus sowie einen Kontaktbereich auf, in welchem das Strukturteil und die äußere B-Säulenverkleidung mit der Seitenwand verbunden sind. Gemäß einer vorteilhaften Ausführungsform sind die Erstreckungsrichtungen des Strukturteils, der Seitenwand und der äußeren B-Säulenverkleidung im Kontaktbereich zumindest im Wesentlichen parallel. Dadurch wird eine besonders gute Einleitung der Kräfte in die Seitenwand erreicht. In besonders günstigen Ausführungsformen ist die Seitenwand im Kontaktbereich zwischen dem Strukturteil und der äußern B-Säulenverkleidung angeordnet, wobei das Strukturteil die Seitenwand von innen und die äußere B-Säulenverkleidung die Seitenwand von außen umgreift. Dadurch, dass die Erstreckungsrichtungen zumindest im Wesentlichen parallel sind, steht für eine Verklebung eine große Kontaktfläche zur Verfügung. Mit "zumindest im Wesentlichen parallel" ist hier gemeint, dass die jeweiligen Erstreckungsrichtungen einen Winkel bis zu 3° zueinander aufweisen können, zumindest aber innerhalb der üblichen Fertigungstoleranzen. Somit wird durch die direkte Einleitung der Kräfte in die Deckschichten des Sandwichs der Seitenwand beim Crashfall ein Höchstmaß an Sicherheit gewährleistet. Der Kontaktbereich wird somit optimal für eine feste Verbindung zwischen Strukturelement, Seitenwand und äußerer B-Säulenverkleidung genutzt, welche eine optimale Kraftübertragung schafft.

Wie oben bereits erwähnt, erstreckt sich die B-Säulenkonstruktion auch in einem Abstandsbereich zwischen dem Fahrerhaus und einer Seitenwand des Aufbaus. Insbesondere besteht in vorteilhaften Ausgestalten ein Abstand zwischen dem hinteren Ende des Fahrerhauses und der vorderen Kante der Seitenwand des Aufbaus in der Längsrichtung und des Kraftfahrzeugs von mehr als 5 cm, bevorzugt mehr als 10cm. Dieser Abstand muss nicht über die gesamte Höhe des Fahrzeugs gleich sein, in größerer Höhe kann er auch mehr als 30 cm betragen. Der Abstand bestimmt neben anderen Parametern, wie fließend der Übergang vom Fahrerhaus zum Aufbau gestaltet werden kann: Je größer der Abstand, desto fließender der Übergang und somit desto aerodynamischer das Fahrzeug.

Gemäß einer Ausführungsform sind die Erstreckungsrichtungen des Strukturteils und/oder der äußeren B-Säulenverkleidung in dem Abstandsbereich zumindest teilweise in einem Winkel von bis zu 30°, vorzugsweise bis zu 25°, besonders bevorzugt bis zu 20°, zu der Erstreckungsrichtung der Seitenwand. Je geringer dieser Winkel, desto fließender ist der Übergang. Vorzugsweise ist die äußere B-Säulenverkleidung so gestaltet, dass sie - abgesehen von eventuell vorhandenen formgestaltenden Stufen - in einem geringen Winkel zu der Erstreckungsrichtung der Seitenwand und somit zur Längsrichtung des Fahrzeugs ausgerichtet ist.

Das Strukturteil ist ebenfalls in bevorzugten Ausführungsformen so geformt, dass es zumindest in einigen Bereichen der gewünschten Außenkontur des Kraftfahrzeugs folgt. Dadurch liegt es zum einen nahe an der äußeren B-Säulenverkleidung und kann mit dieser stoffschlüssig oder auch auf andere Art und Weise verbunden werden, und zum anderen wird dadurch auf der Innenseite Platz für eine Wärme-Isolierung gelassen.

Vorteilhaft ist das Strukturbauteil dazu konstruiert, mit dem Fahrerhaus und einer Seitenwand des Aufbaus formschlüssig und/oder durch Befestigungsmittel verbunden zu werden, insbesondere durch Verschrauben oder Vernieten. Zusätzlich dazu kann auch eine stoffschlüssige Verbindung wie Kleben vorgesehen sein.

Um die Kraftübertragung noch weiter zu verbessern, ist es vorteilhaft, wenn das Strukturbauteil zumindest teilweise der Form der B-Säule des Fahrerhauses folgt, vor allem einer Rundung oder Wölbung derselben. Durch die aneinander angepassten Konturen wird eine hohe Steifigkeit des Verbundes erreicht, insbesondere, wenn die Bauteile flächig miteinander verbunden sind, beispielsweise durch Kleben.

Um die Festigkeit und Steifigkeit des Strukturelements bei möglichst geringem Materialverbrauch weiter zu erhöhen, kann dieses mit Versteifungssicken ausgestattet sein. Diese verlaufen z.B. ungefähr waagerecht, also in eingebautem Zustand parallel zum Boden, wobei mit "ungefähr" eine Toleranz bis 30° gemeint ist. In einer Ausführungsform sind die Sicken nach außen gewölbt und weisen einen relativ breiten Sickenboden auf, an welchem das Strukturteil, wie oben beschrieben, mit der äußeren B-Säulenverkleidung stoffschlüssig verbunden ist. Eine umgekehrte Ausführung, bei welcher sich die Sicken nach innen wölben, ist jedoch auch denkbar, wobei dann noch größere Flächen zur Verklebung mit der äußeren B-Säulenverkleidung zur Verfügung stehen.

Das Strukturteil und/oder die äußere B-Säulenverkleidung sind vorzugsweise aus faserverstärktem Kunststoff gefertigt, insbesondere glasfaserverstärktem Kunststoff. Andere Materialien kommen jedoch ebenso in Frage, beispielsweise Metall wie eine Aluminiumlegierung, oder auch Thermoplast oder andere Kunststoffe.

In einer vorteilhaften Ausgestaltung weist die B-Säulenkonstruktion ferner eine Innenverkleidung zur Verkleidung des Strukturteils zum Innenraum des Aufbaus auf, wobei vorteilhaft zwischen Strukturteil und Innenverkleidung eine Wärmeisolierung angeordnet sein kann. Die Innenverkleidung hat in vielen Ausgestaltungen keine tragende Funktion, sondern dient der Verkleidung des Strukturteils und ist typischerweise formschlüssig mit diesem verbunden, beispielsweise über eine Schraubverbindung.

Die B-Säulenkonstruktion weist darüber hinaus in vorteilhaften Ausführungsformen eine Wärme-Isolierung auf. Diese kann zwischen Strukturteil und Innenverkleidung oder zwischen Strukturteil und äußerer B-Säulenverkleidung angeordnet sein. In vorteilhaften Ausgestaltungen ist sie auf das Strukturteil aufgebracht. In dem oben beschriebenen Beispiel, in welchem das Strukturteil Versteifungssicken aufweist, kann in der Sicke eine Wärme-Isolierung aufgebracht sein. Zwischen den Sicken befindet sich die Wärme-Isolierung vorteilhaft auf der anderen Seite, beispielsweise außen, und kann aufgeklebt sein.

Die Erfindung ist auch auf ein Kraftfahrzeug, insbesondere auf ein Reisemobil oder einen Kraftwagen mit Kofferaufbau oder Wohnkabine gerichtet, welches die oben beschriebene B-Säulenkonstruktion aufweist, besonders vorteilhaft auf beiden Seiten. Bei dem Reisemobil handelt es sich vorteilhaft um ein teilintegriertes Reisemobil oder um ein Reisemobil mit Alkoven.

Besonders vorteilhaft kann die erfindungsgemäße B-Säulenkonstruktion bei Fahrzeugen verwendet werden, welche für den Aufbau Sandwichplatten mit zwei äußeren Metallschichten, insbesondere aus Aluminiumblechen, und einer inneren Schaumschicht verwenden. Auf diese besonders festen Deckschichten des Sandwichs der Seitenwand können im Fall eines Unfalls besonders effektiv die Kräfte übertragen werden, so dass eine besonders hohe Crash-Sicherheit erreicht wird.

Die Erfindung nachfolgend anhand von Ausführungsbeispielen mit Bezug auf die beiliegenden Figuren näher beschrieben. In den Figuren zeigen:
- Fig. 1:: eine schematische Seitenansicht eines teilintegrierten Reisemobils mit einer B-Säulenkonstruktion gemäß einer Ausführungsform der Erfindung;
- Fig 2:: die Ansicht der Fig. 1 mit eingezeichnetem Strukturteil;
- Fig. 3:: einen Querschnitt durch eine B-Säulenkonstruktion gemäß Stand der Technik;
- Fig. 4:: einen Querschnitt durch eine B-Säulenkonstruktion gemäß einer Ausführungsform der Erfindung;
- Fig. 5:: eine Ansicht eines Strukturteils gemäß einer Ausführungsform der Erfindung;
- Fig. 6:: eine Ansicht einer äußeren B-Säulenverkleidung gemäß einer Ausführungsform der Erfindung.

Gleiche oder gleichwirkende Komponenten sind in sämtlichen Figuren mit denselben Bezugszeichen gekennzeichnet. Schraubverbindungen sind in den Zeichnungen mit strichpunktierten Linien dargestellt, wobei diese Verbindungen auch durch andersartige formschlüssige Verbindungen oder andere Befestigungselemente realisiert sein können.

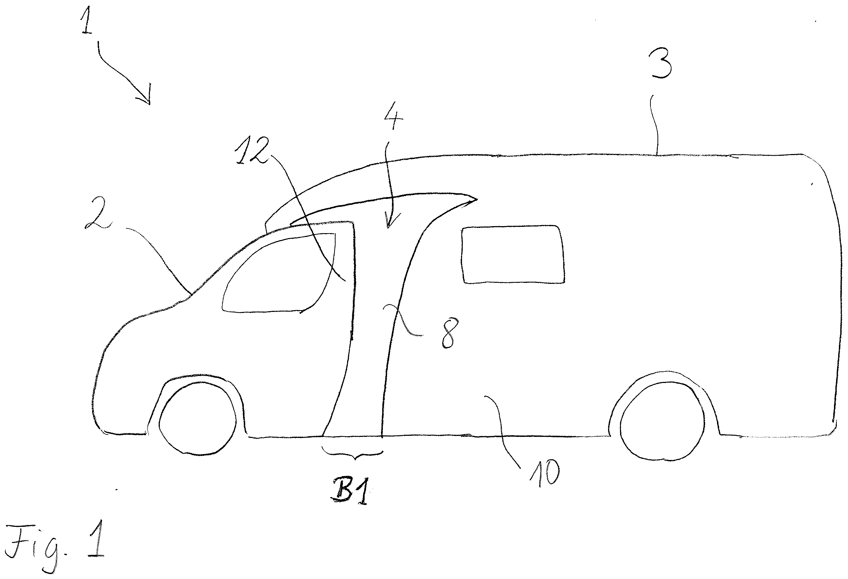

Fig. 1 zeigt eine schematische Seitenansicht eines teilintegrierten Reisemobils mit einer B-Säulenkonstruktion mit einer Ausführungsform der Erfindung. Das Reisemobil 1 weist ein Fahrerhaus 2 und einen Aufbau 3 auf, welcher neben einem Dach, Heck und weiteren Konstruktionselementen eine Seitenwand 10 aufweist. Zwischen der B-Säule 12 des Fahrerraums 2 und der Seitenwand 10 befindet sich der B-Säulenbereich B1, in welchem die B-Säulenkonstruktion 4 angeordnet ist. Von außen ist davon lediglich die äußere B-Säulenverkleidung 8 zu sehen.

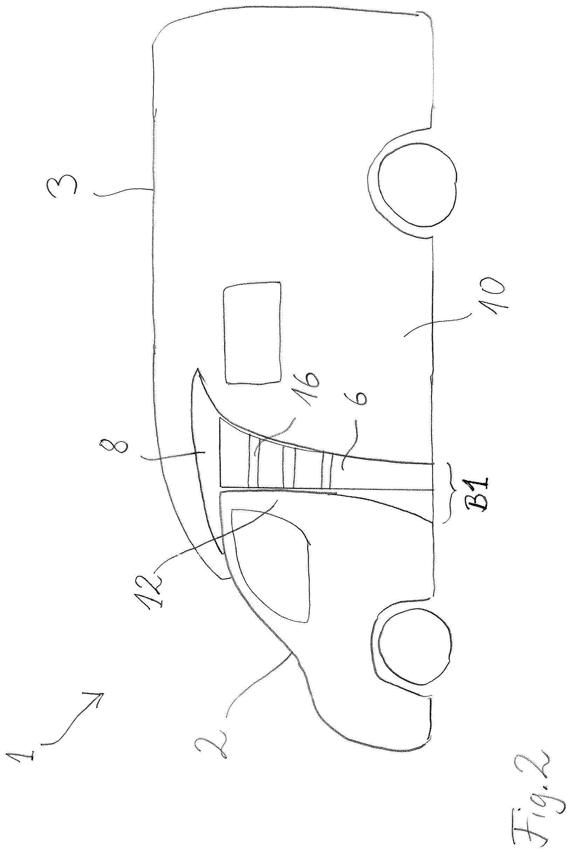

Zur Verdeutlichung ist in Fig. 2 zusätzlich das eigentlich in der Seitenansicht nicht sichtbare Strukturteil 6 dargestellt, welches drei untereinander angeordnete Versteifungssicken 16 aufweist.

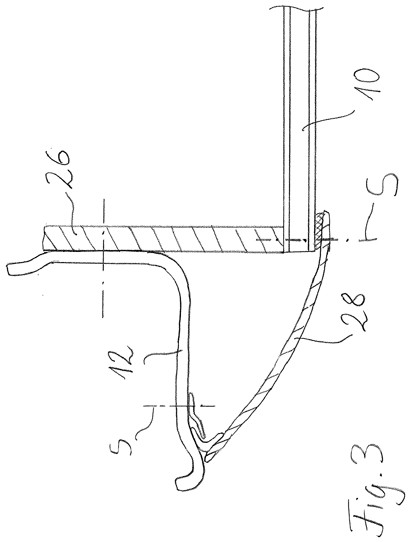

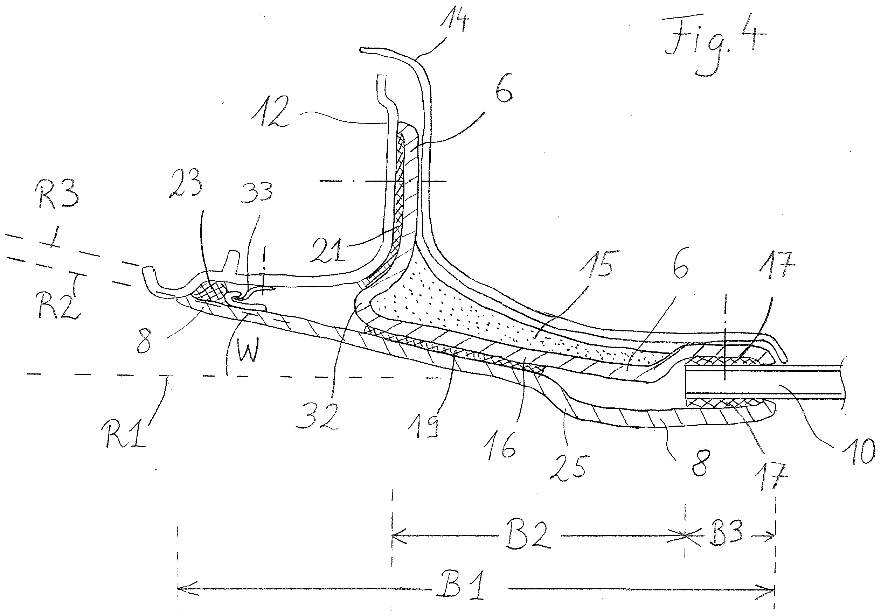

Bevor der Aufbau der B-Säulenkonstruktion 4 näher beschrieben wird, soll anhand der Fig. 3 kurz die bisher übliche Art der Verbindung zwischen Fahrerhaus und Aufbau erläutert werden. In den Figuren 3 und 4 sind Verbindungen durch Befestigungselemente wie Schrauben oder Nieten mit strichpunktierten Linien dargestellt. Stoffschlüssige Verbindungen, insbesondere durch Kleben, sind kreuzschraffiert dargestellt. Wärme-Isolierung ist gepunktet dargestellt.

Fig. 3 zeigt einen ungefähr waagerechten Querschnitt durch den B-Säulenbereich. Dabei ist die B-Säule 12 des Fahrerhauses zu sehen, die sich an dessen Rückseite befindet und den Fahrerraum nach außen begrenzt. Typischerweise wird an die quer zur Fahrtrichtung ausgerichtete Hinterwand eine einfache Platte 26 aus Holz oder Sandwichmaterial, genannt Steher 26, angesetzt und verschraubt. Der Steher 26 reicht mit seiner Stirnwand bis zur Seitenwand 10, die hier als Sandwichplatte realisiert ist. Typischerweise besteht die Außenhaut der Sandwichplatte aus Aluminium, die Mittelschicht aus Schaum und die innere Schicht aus Sperrholz. Steher 26 und Seitenwand 10 sind z. B. durch eine Verschraubung S (strichpunktierte Linie) miteinander verbunden.

Der so entstehende abrupte Vorsprung, der sich aus der größeren Breite des Aufbaus 3 gegenüber dem Fahrerhaus 2 ergibt, wird bei hochwertigeren Reisemobilen oft durch eine Verkleidung 28 kaschiert. Diese rundet den Übergang zwar ab, er bleibt jedoch immer noch relativ ausgeprägt mit einem mehr oder weniger stark nach außen weisenden Verkleidungsabschnitt 28. Wie aus der Zeichnung ersichtlich ist, weist die Verkleidung 28 gegenüber der Seitenwand 10 einen erheblichen Winkel von bis zu 45° auf. Dieser abrupte Übergang von Führerhaus zu Aufbau ist typisch für teilintegrierte Reisemobile und erschwert ein formschönes und aerodynamisches Design.

Dagegen zeigt Fig. 4 einen ebenfalls ungefähr waagerechten Schnitt durch eine B-Säulenkonstruktion 4 gemäß einem Ausführungsbeispiel der Erfindung. Die B-Säule 12 des Fahrerhauses ist identisch zu dem Beispiel der Fig. 3. Anstatt des Stehers 26 ist jedoch in diesem Beispiel ein Strukturteil 6 vorgesehen, welches als Formteil ausgebildet ist, beispielsweise aus faserverstärktem Kunststoff. Durch die so ermöglichte geschwungene Form ist das Strukturteil 6 in seinem Verbindungsbereich zu der B-Säule des Fahrerhauses ungefähr parallel zu diesem. In dem Kontaktbereich zu der Seitenwand 10 hingegen ist seine Erstreckungsrichtung im Wesentlichen parallel zu der Seitenwand 10. Auf diese Weise kann das Strukturteil 6 sowohl mit der B-Säule 12 des Fahrerhauses 2 und der Seitenwand 10 verklebt werden, zusätzlich zu den dargestellten Schraubverbindungen.

Im Unterschied zu dem Beispiel gemäß Stand der Technik besteht hier ein Abstand B2 zwischen hinterem Ende des Fahrerhauses 2 und dem vorderen Ende der Seitenwand 10. Dieser kann durch das Strukturteil 6 aufgrund seiner Formgebung und in Verbund mit der äußeren B-Säulenverkleidung 8 überbrückt werden. Der Kontaktbereich zwischen der B-Säulenkonstruktion und der Seitenwand 10 ist mit B3 bezeichnet. Der B-Säulenbereich, also der Bereich über den sich die erfindungsgemäße B-Säulenkonstruktion 4 erstreckt, ist mit B1 bezeichnet.

Jedenfalls im Bereich einer Sicke 16, der in Fig. 4 dargestellt ist, ist die Form des Strukturteils 6 in dem Verbindungsbereich mit der B-Säule 12 des Fahrerhauses an dessen Form angepasst. Insbesondere verweist das Strukturteil 6 in diesem Bereich eine Wölbung 32 hin zur Frontseite des Fahrzeuges auf, womit es einer entsprechenden Biegung in der B-Säule 12 des Fahrerhauses folgt. Dadurch sind die Erstreckungsrichtungen der Bauteile 12 und 6 über einen besonders großen Bereich parallel zueinander, in welchem sie auch miteinander verklebt sind, was mit 21 gekennzeichnet ist. Ferner wird durch die angepasste Form im Falle eines Crashs die Kraftübertragung vom Fahrerhaus 12 zur Seitenwand 10 erhöht und somit die passive Sicherheit gefördert. Zusätzlich zu der Verklebung 21 ist das Strukturteil 6 auch mit mehreren Befestigungsmitteln, insbesondere Schrauben, mit der B-Säule 12 des Fahrerhauses 2 verbunden, wie durch die strichpunktierte Linie angedeutet.

Am frontseitigen Ende der B-Säule 12 des Fahrerhauses ist die äußere B-Säulenverkleidung 8 angesetzt und bei 23 verklebt. Zusätzlich kann eine formschlüssige Verbindung 33 z. B. durch eine Hinterschneidung von angesetzten Klemmelementen vorgesehen sein. Hierzu ist ein Haltelement 33 mit der B-Säule 12 verschraubt.

Die B-Säulenverkleidung 8 verläuft im vorderen Bereich (wobei mit "vorne" die Front des Fahrzeugs gemeint ist) entlang einer Erstreckungsrichtung R2, welche einen Winkel W mit der Erstreckungsrichtung R1 der Seitenwand 10 einschließt. Es versteht sich, dass dieser Winkel über die Fläche der äußeren B-Säulenverkleidung 8 variiert. Zumindest über einen nicht unerheblichen Teil der Außenfläche der äußeren B-Säulenverkleidung 8 ist der Winkel jedoch möglichst klein. Dies ergibt eine besonders aerodynamische Außenkontur des Fahrzeugs. Mit "nicht unerheblichen Teil" ist beispielsweise über 30% der Fläche der äußeren B-Säulenverkleidung (Dachbereich nicht eingerechnet) gemeint. Lediglich im Bereich einer Stufe 25 ist der Winkel größer.

Ferner verlaufen die Erstreckungsrichtungen der äußeren B-Säulenverkleidung 8 und des Strukturteils 6 in dem Bereich 19 etwa parallel miteinander, so dass sie dort durch eine stoffschlüssige Verbindung, insbesondere Kleben, miteinander verbunden werden können. Durch diese - im Querschnitt - 3-Punkt-Verbindung in den Bereichen 19, 21 und 23 ergibt sich eine besonders hohe Steifigkeit der B-Säulenkonstruktion.

Weiter in Richtung Heck weitet sich der Abstand zwischen dem Strukturteil 6 und der äußeren B-Säulenverbindung 8 auf, damit diese Elemente von beiden Seiten den vorderen Rand der Seitenwand 10 umschließen können. In diesem Kontaktbereich B3 verlaufen die Erstreckungsrichtungen des Strukturteils 6, der Seitenwand 10 und der äußeren B-Säulenverkleidung vorzugsweise zumindest im Wesentlichen parallel zueinander, um eine direkte Einleitung der Kräfte in die Deckschichten des Sandwichs der Seitenwand 10 im Crashfall zu ermöglichen. Diese Elemente sind im Bereich 17 miteinander verklebt, wobei das Strukturteil 6 zusätzlich durch ein Befestigungselement wie eine Schraube mit der Seitenwand 10 verbunden ist. Die in Fig. 4 dargestellte Seitenwand 10 hat vorzugsweise einen Aufbau mit zwei äußeren Schichten aus Aluminiumlegierung und einer inneren Schaumschicht, um die Stabilität zu erhöhen.

Schließlich ist als fakultatives drittes Element der B-Säulenkonstruktion die Innenverkleidung 14 dargestellt, welche ebenfalls innen an der Seitenwand 10 sowie der Rückseite des Fahrerhauses 12 befestigt, insbesondere verschraubt und/oder vernietet und/oder verklebt und/oder geklettet wird. Sie hat Verkleidungsfunktion zum Innenraum des Fahrzeugs.

Um schließlich eine geeignete Wärme-Isolierung auch im Abstandsbereich B2 zu gewährleisten, ist zwischen dem Strukturteil 6 und der Innenverkleidung 14 eine Wärme-Isolierung 15 vorgesehen.

Wie aus Fig. 4 ersichtlich, sind Strukturteil 6 und äußere B-Säulenverkleidung somit in ihren Randbereichen mit der B-Säule 12 des Fahrzeugs bzw. der Seitenwand 10 verbunden, und zusätzlich in mehreren Bereichen miteinander verklebt. Dadurch ergibt sich eine erhöhte Steifigkeit und Stabilität. In einer Versuchsanordnung haben Verwindungsmessungen ergeben, dass die Torsions-Steifigkeit dieser Konstruktion um 20-30% höher ist als bei einer herkömmlichen Konstruktion, wie in Fig. 3 dargestellt.

Für die dargestellten Klebverbindungen 17, 19, 21 und 23 kann ein beliebiger geeigneter Kleber verwendet werden, ein- oder zweikomponentig, beispielsweise ein Polyurethankleber.

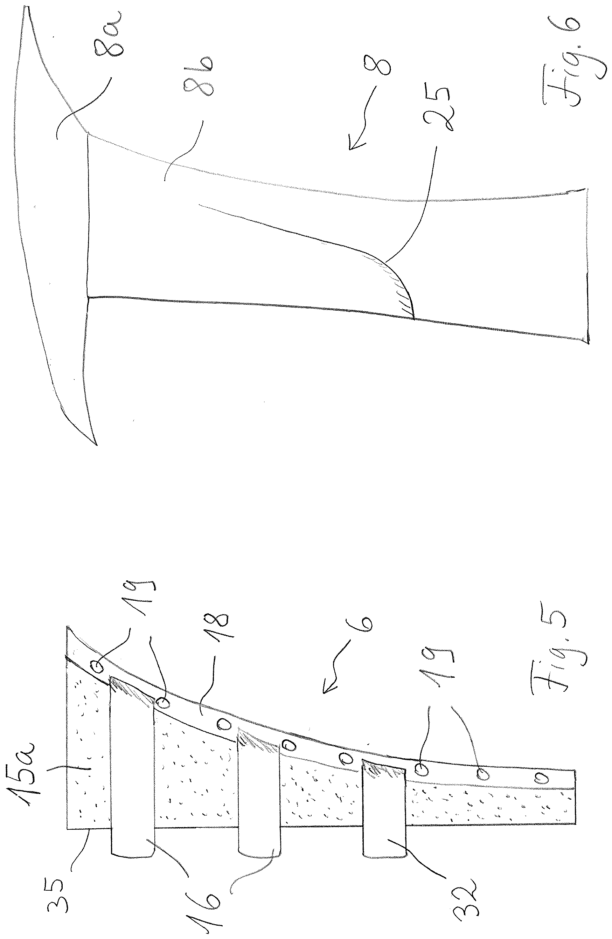

Fig. 5 zeigt eine schematische Draufsicht auf die Außenseite eines Strukturteils 6, welches z. T. mit einer Isolierschicht 15a bedeckt ist. Diese wird beispielsweise auf das Strukturteil 6 aufgeklebt. Der heckseitige Rand 18 ist von der Isolierung ausgespart, da dieser mit der Seitenwand 10 überlappt und dort an den Stellen 19, an denen entsprechende Löcher im Strukturteil 6 vorgesehen sein können, mit der Seitenwand 10 verschraubt/vernietet werden kann.

Ferner sind in Fig. 5 die Versteifungssicken 16 sichtbar. Im dargestellten Beispiel sind es drei etwa waagrechte Sicken. Diese können jedoch auch eine andere Ausrichtung oder Anzahl aufweisen. Es sind auch Ausführungsbeispiele mit z. B. zwei bis zwanzig Sicken umfasst, wobei diese auch in einem stumpfen oder spitzen Winkel zum Boden angeordnet sein können. Am frontseitigen Rand 35 ist das Strukturteil 6 nach innen umgebogen, wie in Fig. 4 ersichtlich, um dort mit einer B-Säule 12 des Fahrzeugs verbunden zu werden. Die Sickenbereiche 16 weisen Auswölbungen 32 auf, mit der sie der Kontur der B-Säule 12 des Fahrzeugs folgen, um die Krafteinleitung im Crashfall zu verbessern. Wie ebenfalls in Fig. 4 ersichtlich, sind die Sickenbereiche 16 auf der in Fig. 5 abgewandten Seite mit einer Isolierung 15 versehen. Vorteilhafterweise ist das Strukturteil 6 innen und/oder außen über einen Großteil seiner Fläche mit einer Wärme-Isolierschicht 15, 15a versehen, damit im B-Säulenbereich kein Wärmeverlust aus dem FahrzeugInnenraum entsteht.

In Fig. 6 ist die äußere B-Säulenverkleidung 8 dargestellt, welche von außen auf das Strukturteil 6 der Fig. 5 aufgesetzt und mit diesem verklebt werden kann, insbesondere im Bereich der Sicken 16. Die äußere B-Säulenverkleidung 8 weist einen Seitenwand-Abschnitt 8b auf, der im Wesentlichen das Strukturteil 6 überdeckt. Zudem reicht es mit seinem Dachabschnitt 8a bis an das erhöhte Dach des Aufbaus 3 und sorgt hierfür einen formschönen und aerodynamisch günstigen Übergang zwischen Fahrerhaus 2 und Aufbau 3. Um die Verbreiterung von Fahrerhaus 2 zu Aufbau 3 zu realisieren, ist bei 25 eine leichte Stufe angeordnet, d. h. die äußere B-Säulenverkleidung 8 ist unterhalb der Stufe stärker nach außen gewölbt, so dass das Fahrzeug im unteren Bereich breiter ist.

## Patentansprüche

1. B-Säulenkonstruktion (4) für ein Kraftfahrzeug (1) mit einem Fahrerhaus (2) und einem hinter dem Fahrerhaus angeordneten Aufbau (3), insbesondere für ein Reisemobil oder einen Kraftwagen mit Kofferaufbau oder Wohnkabine, wobei die B-Säulenkonstruktion (4) dazu konfiguriert ist, das Fahrerhaus (2) mit dem Aufbau (3) zu verbinden,
**dadurch gekennzeichnet, dass** die B-Säulenkonstruktion (4) ein als Formteil ausgebildetes Strukturteil (6) und eine äußere B-Säulenverkleidung (8) aufweist.

2. B-Säulenkonstruktion (4) nach Anspruch 1, wobei das Strukturteil (6) und die äußere B-Säulenverkleidung (8) dazu konfiguriert sind, mit dem Fahrerhaus (2) und miteinander verbunden zu werden, wobei insbesondere die Verbindung zwischen dem Strukturteil (6) und der äußere B-Säulenverkleidung (8) zumindest teilweise stoffschlüssig erfolgt.

3. B-Säulenkonstruktion nach Anspruch 2, wobei die Erstreckungsrichtungen des Strukturteils (6) und der äußeren B-Säulenverkleidung (8) im Bereich der stoffschlüssigen Verbindung im Wesentlichen parallel zueinander sind.

4. B-Säulenkonstruktion (4) nach einem der vorhergehenden Ansprüche, welche sich über einen B-Säulenbereich (B1) erstreckt, wobei der B-Säulenbereich einen Abstandsbereich (B2) zwischen dem Fahrerhaus (2) und einer Seitenwand (10) des Aufbaus umfasst, sowie einen Kontaktbereich (B3), in welchem das Strukturteil (6) und die äußere B-Säulenverkleidung (8) mit der Seitenwand (10) verbunden sind,
**dadurch gekennzeichnet, dass** die Erstreckungsrichtungen des Strukturteils (6), der Seitenwand (10) und der äußeren B-Säulenverkleidung (8) im Kontaktbereich (B3) zumindest im Wesentlichen parallel sind.

5. B-Säulenkonstruktion (4) nach einem der vorhergehenden Ansprüche, wobei der B-Säulenbereich (B1) einen Abstandsbereich (B2) zwischen dem Fahrerhaus und einer Seitenwand (10) des Aufbaus umfasst,
**dadurch gekennzeichnet, dass** die Erstreckungsrichtungen des Strukturteils (6) und/oder der äußeren B-Säulenverkleidung (8) in dem Abstandsbereich zumindest teilweise in einem Winkel von bis zu 30°, vorzugsweise bis zu 20°, zu der Erstreckungsrichtung des Seitenwand (10) liegen.

6. B-Säulenkonstruktion (4) nach einem der vorhergehenden Ansprüche, wobei das Strukturteil (6) zumindest in einigen Bereichen der gewünschten Außenkontur des Kraftfahrzeugs folgt.

7. B-Säulenkonstruktion (4) nach einem der vorhergehenden Ansprüche, wobei das Strukturteil (6) dazu konfiguriert ist, mit dem Fahrerhaus (2) und einer Seitenwand (10) des Aufbaus formschlüssig verbunden, insbesondere verschraubt und/oder verklebt zu werden.

8. B-Säulenkonstruktion (4) nach einem der vorhergehenden Ansprüche, wobei die Form des Strukturteils (6) in dem Verbindungsbereich zum Fahrerhaus (2) zumindest teilweise an die Form der B-Säule (12) des Fahrerhauses angepasst ist, insbesondere an eine Biegung der B-Säule (12) des Fahrerhauses.

9. B-Säulenkonstruktion (4) nach einem der vorhergehenden Ansprüche, wobei das Strukturteil (6) Versteifungssicken (16) aufweist.

10. B-Säulenkonstruktion (4) nach einem der vorhergehenden Ansprüche, wobei das Strukturteil (6) und/oder die äußere B-Säulenverkleidung (8) aus faserverstärktem Kunststoff, insbesondere glasfaserverstärktem Kunststoff, aus geformten Metallblech, insbesondere aus Aluminiumlegierung, oder aus einem Thermoplast gefertigt sind.

11. B-Säulenkonstruktion (4) nach einem der vorhergehenden Ansprüche, welche ferner eine Innenverkleidung (14) zur Verkleidung des Strukturteils (6) zum Innenraum des Aufbaus (3) hin aufweist.

12. B-Säulenkonstruktion (4) nach einem der vorhergehenden Ansprüche, wobei zwischen Strukturteil (6) und Innenverkleidung (14) und/oder zwischen Strukturteil (6) und äußerer B-Säulenverkleidung eine Wärmeisolierung (15) angeordnet ist.

13. Kraftfahrzeug (1), insbesondere Reisemobil oder Kraftwagen mit Kofferaufbau oder Wohnkabine, welches eine B-Säulenkonstruktion (4) nach einem der vorhergehenden Ansprüche aufweist.

## Claims

1. B-pillar construction (4) for a motor vehicle (1) having a driver's cab (2) and a body (3) which is arranged behind the driver's cab, in particular for a motor home or a motor car with a box body or a camper shell, the B-pillar construction (4) being configured to connect the driver's cab (2) to the body (3), **characterized in that** the B-pillar construction (4) has a structural part (6) which is configured as a shaped part and an outer B-pillar trim panel (8).

2. B-pillar construction (4) according to Claim 1, the structural part (6) and the outer B-pillar trim panel (8) being configured to be connected to the driver's cab (2) and to one another, the connection between the structural part (6) and the outer B-pillar trim panel (8) taking place, in particular, at least partially in an integrally joined manner.

3. B-pillar construction according to Claim 2, the directions of extent of the structural part (6) and the outer B-pillar trim panel (8) being substantially parallel to one another in the region of the integrally joined connection.

4. B-pillar construction (4) according to one of the preceding claims which extends over a B-pillar region (B1), the B-pillar region comprising a spacing region (B2) between the driver's cab (2) and a side wall (10) of the body, and a contact region (B3), in which the structural part (6) and the outer B-pillar trim panel (8) are connected to the side wall (10), **characterized in that** the directions of extent of the structural part (6), the side wall (10) and the outer B-pillar trim panel (8) are at least substantially parallel in the contact region (B3).

5. B-pillar construction (4) according to one of the preceding claims, the B-pillar region (B1) comprising a spacing region (B2) between the driver's cab and a side wall (10) of the body, **characterized in that** the directions of extent of the structural part (6) and/or the outer B-pillar trim panel (8) in the spacing region lie at least partially at an angle of up to 30°, preferably of up to 20°, with respect to the direction of extent of the side wall (10).

6. B-pillar construction (4) according to one of the preceding claims, the structural part (6) following the desired outer contour of the motor vehicle at least in some regions.

7. B-pillar construction (4) according to one of the preceding claims, the structural part (6) being configured to be connected in an integrally joined manner, in particular screwed and/or adhesively bonded, to the driver's cab (2) and a side wall (10) of the body.

8. B-pillar construction (4) according to one of the preceding claims, the shape of the structural part (6) in the connecting region to the driver's cab (2) being adapted at least partially to the shape of the B-pillar (12) of the driver's cab, in particular to a bend of the B-pillar (12) of the driver's cab.

9. B-pillar construction (4) according to one of the preceding claims, the structural part (6) having reinforcing beads (16).

10. B-pillar construction (4) according to one of the preceding claims, the structural part (6) and/or the outer B-pillar trim panel (8) being manufactured from fibre-reinforced plastic, in particular glass fibre-reinforced plastic, from shaped metal sheet, in particular from aluminium alloy, or from a thermoplastic.

11. B-pillar construction (4) according to one of the preceding claims which, furthermore, has an inner trim panel (14) for lining the structural part (6) towards the interior compartment of the body (3).

12. B-pillar construction (4) according to one of the preceding claims, a thermal insulation means (15) being arranged between the structural part (6) and the inner trim panel (14) and/or between the structural part (6) and the outer B-pillar trim panel.

13. Motor vehicle (1), in particular motor home or motor car with a box body or a camper shell, which motor vehicle (1) has a B-pillar construction (4) according to one of the preceding claims.

## Revendications

1. Structure de montant B (4) pour un véhicule automobile (1) comportant une cabine de conducteur (2) et une superstructure (3) disposée derrière la cabine de conducteur, en particulier pour un camping-car ou pour un véhicule utilitaire avec caisse ou habitacle, la structure de montant B (4) étant configurée pour relier la cabine de conducteur (2) à la superstructure (3),
**caractérisée en ce que**
la structure de montant B (4) comprend une partie structurelle (6) réalisée sous la forme d'une pièce façonnée et un habillage extérieur de montant B (8).

2. Structure de montant B (4) selon la revendication 1,
dans laquelle
la partie structurelle (6) et l'habillage extérieur de montant B (8) sont configurés pour être reliés à la cabine de conducteur (2) et pour être reliés entre eux, en particulier la liaison entre la partie structurelle (6) et l'habillage extérieur de montant B (8) étant réalisée au moins partiellement par coopération de matière.

3. Structure de montant B selon la revendication 2,
dans laquelle
les directions d'extension de la partie structurelle (6) et de l'habillage extérieur de montant B (8) sont sensiblement parallèles l'une à l'autre dans la zone de la liaison par coopération de matière.

4. Structure de montant B (4) selon l'une des revendications précédentes,
qui s'étend sur une zone de montant B (B1), la zone de montant B comprenant une zone d'espacement (B2) entre la cabine de conducteur (2) et une paroi latérale (10) de la superstructure, ainsi qu'une zone de contact (B3) dans laquelle la partie structurelle (6) et l'habillage extérieur de montant B (8) sont reliés à la paroi latérale (10),
**caractérisée en ce que**
les directions d'extension de la partie structurelle (6), de la paroi latérale (10) et de l'habillage extérieur de montant B (8) sont au moins sensiblement parallèles dans la zone de contact (B3).

5. Structure de montant B (4) selon l'une des revendications précédentes,
la zone de montant B (B1) comprenant une zone d'espacement (B2) entre la cabine de conducteur (2) et une paroi latérale (10) de la superstructure, **caractérisée en ce que**
dans la zone d'espacement, les directions d'extension de la partie structurelle (6) et/ou de l'habillage extérieur de montant B (8) se situent au moins partiellement sous un angle allant jusqu'à 30°, de préférence jusqu'à 20°, par rapport à la direction d'extension de la paroi latérale (10).

6. Structure de montant B (4) selon l'une des revendications précédentes,
dans laquelle
la partie structurelle (6) suit le contour extérieur souhaité du véhicule automobile au moins dans quelques zones.

7. Structure de montant B (4) selon l'une des revendications précédentes,
dans laquelle
la partie structurelle (6) est configurée pour être reliée par coopération de forme à la cabine de conducteur (2) et à une paroi latérale (10) de la superstructure, en particulier par vissage et/ou par collage.

8. Structure de montant B (4) selon l'une des revendications précédentes,
dans laquelle
dans la zone de liaison avec la cabine de conducteur (2), la forme de la partie structurelle (6) est adaptée au moins partiellement à la forme du montant B (12) de la cabine de conducteur, en particulier à une cambrure du montant B (12) de la cabine de conducteur.

9. Structure de montant B (4) selon l'une des revendications précédentes,
dans laquelle
la partie structurelle (6) présente des moulures de rigidification (16).

10. Structure de montant B (4) selon l'une des revendications précédentes,
dans laquelle
la partie structurelle (6) et/ou l'habillage extérieur de montant B (8) sont fabriqués en matière plastique renforcée de fibres, en particulier en matière plastique renforcée de fibres de verre, en tôle métallique mise en forme, en particulier en un alliage d'aluminium, ou en une matière thermoplastique.

11. Structure de montant B (4) selon l'une des revendications précédentes, comprenant en outre un habillage intérieur (14) pour habiller la partie structurelle (6) vers l'intérieur de la superstructure (3).

12. Structure de montant B (4) selon l'une des revendications précédentes,
dans laquelle
une isolation thermique (15) est agencée entre la partie structurelle (6) et l'habillage intérieur (14) et/ou entre la partie structurelle (6) et un habillage extérieur de montant B.

13. Véhicule automobile (1), en particulier camping-car ou véhicule utilitaire avec caisse ou habitacle, qui comprend une structure de montant B (4) selon l'une des revendications précédentes.
